# EUROPEAN PATENT APPLICATION

(11) **EP 0 976 790 A1**
(43) Date of publication of application: **02.02.2000**
(21) Application number: 98305941.1
(22) Date of filing: 27.07.1998
(51) Int. Cl.: C08L 99/00, C08L 97/02

(54) **Process for the manufacture of composite materials**

(71) Applicant: Cargill BV, 1013 BL Amsterdam (NL)
(72) Inventor: Taverne-Veldhuizen, Wilma, 3925 BT Scherpenzeel (NL); Simka, Hartati, Malang 65119 (ID); Feil, Herman, 6708 PD Wageningen (NL)
(74) Representative: Votier, Sidney David

(57) **Abstract**

Composite materials are manufactured by subjecting a vegetable material containing fibre, or a mixture of such vegetable materials, to at least one thermoplastic processing step, such as extrusion, compression moulding, injection moulding, vacuum moulding or film blowing. The thermoplastic processing may be carried out in the presence of a bonding agent, for example a chemical bonding agent such as urea-formaldehyde, or a protein (which protein may be contained in the vegetable material or added to it). Prior to the thermoplastic processing step(s), the vegetable material(s) are subjected to at least one preliminary treatment, for example a heat treatment, addition of an alkali, grinding, wetting, washing, defibrillation, blending and/or mixing. The product of the thermoplastic processing step(s) may be subjected to an after-treatment, for example drying and/or curing. Vegetable materials include soybean, sunflower, rapeseed, oil palm, cocoa, flax, wheat and barley products. The vegetable material(s) may be mixed with additives prior to and/or during the thermoplastic processing step(s), for example water, glycerol, glyoxal, glutaric dialdehyde, lecithin, wood-based raw materials and/or a colourant. The composites may be formed in a variety of configurations, including board, sheets and films, and may find use as constructional items for use in the building, construction, furniture or cabinetry industries.

## Description

### Field of the Invention

The present invention relates to a process for the production of a composite material from at least one vegetable material that contains fibre, especially to such a process wherein the vegetable material is an agricultural product or by-product.

### Background of the Invention

A composite material that has found widespread use in constructional applications is medium density fibreboard (MDF), the world market for which is still growing. Conventionally, MDF is made from chips or other particles of wood glued together with an organochemical combination such as a formaldehyde/urea or melamine/phenol resin. However, such organochemical substances are aggressive chemical mixtures and are considered to be hazardous to human beings and animals, as well as giving rise to products that are poorly degradable in the environment.

U.S. Patent No. 5,153,242 (Timm *et al.)* discloses a process for the production of composition board that includes only naturally occurring agricultural products having protein from the germ seed and/or foliage and having filler from foliage, stems or the like from the same plant, where there is sufficient protein for binding, as by polymerisation through the reactions of the peptide (or amide) and/or carboxyl groups. A pressure of at least 50 psi (344 kPa) and 200°F (93.3°C) is applied for a sufficient time to alter the molecular structure by causing polymerisation of the protein. No chemical additives are necessary but it is useful to include sufficient water to increase heat transfer for uniform temperature and to render the protein sufficiently flexible or mobile to come into intimate contact with, and to flow around, the contours of the surfaces to be bound together (column 2, lines 46-62). Suitable high-protein agricultural products include corn, sorghum or soybean (column 5, lines 28-31). In Example 1 of this patent, corn germ was ground and then mixed with water and corn fibre, the resultant mixture being cured at a temperature of 330°F (165.6°C) for 1.5 hours in an aluminium mould in order to provide a board. This U.S. patent further suggests that the cross-linking mechanism of the protein binders may be improved by the addition of an initiator, for example an oxirane or hydantoin (column 5, lines 67, to column 6, line 46).

A similar disclosure is found in U.S. Patent No. 5,374,670 (Ayorinde *et al.),* which claims methods of making a composition board comprising the steps of grinding an agricultural product having within it substantial lipids (claim 1) or having within it a protein with linear polymers of molecular weight of at least 2,000, linked with peptide linkages of at least 30 in number (claim 2) until it is reduced in size to at least 18 mesh; mixing water with the ground agricultural product; adding an initiator which causes polymerisation of the lipids (claim 1) or, optionally, adding a reactant that reacts with an amine group of the protein (claim 3); packing the agricultural product to a density of at least 0.4 g/ml and a specific gravity of at least 0.4; and moulding the agricultural product into a fixed shape, such as a continuous board, by the application of sufficient heat and pressure.

United Kingdom Patent Application No. 2,142,943A (Shoji Ohata) discloses a process for producing a composite product, such as building board, furniture board, reconstituted lumber and moulded articles, from bagasse or other lignocellulosic material containing a high proportion of free sugars, particularly from non-woody plants, such as sorghum, corn, sunflower or flax (page 1 of text, lines 10-14 and 48-53). The lignocellulosic material is comminuted, dried and then moulded, without any added resin binders, at a temperature of at least 180°C and at a pressure sufficient to compound the material into a moulded product (page 1, lines 54-62). This document suggests that the residual sugars are transformed into an insoluble and infusible polymeric substance and that the moulding is carried out such as to thermoset the bond *in situ* (page 1, lines 58-62).

U.S. Patent No. 5,593,625 (Reibel *et al.)* discloses a thermoset biocomposite particulate material, made from a ground leguminous crop and cellulosic material, that forms structurally rigid thermoset biocomposite materials upon fusing the particulate material under pressure (column 4, lines 22-26). Although agricultural fibre, e.g. hammer-milled corn stalks, can be used as the cellulosic material, the preferred source appears to be paper (column 7, lines 25-42). The ground leguminous material may be any of the nitrogen-fixing crops, including soybeans, peas, clover and alfalfa. Such materials may be used in the form of whole, de-hulled beans, meals, flours and isolates (column 8, lines 22-43). The binder in the system appears to be a vegetable protein-based thermosetting resin system (also referred to as a "legume-based resin") (column 5, lines 28-46). The dry biocomposite particles may be fused into a rigid structure by pressing under an elevated pressure and temperature, e.g. 450-750 psi (3102-5171 kPa) and 121-175°C (column 3, lines 46-64). The use of a colorant and the use of a secondary thermosetting binder (e.g. an aromatic isocyanate) are also disclosed. Related disclosures are also found in U.S. Patents No. 5,611,882 (Reibel *et al.)* and No. 5,635,123 (Reibel *et al.).*

Notwithstanding these disclosures, there remains a need in the art for a process whereby composite materials, e.g. in the form of artefacts such as boards, panels and the like, may be produced from agricultural products or by-products, especially from oil seeds and by-products of oil seed processing, in which the need for potentially hazardous chemical binders and the like may be reduced or eliminated. Furthermore, there is also a need for a process that gives rise to composites having improved characteristics, especially with respect to water-absorption and swelling.

### Summary of the Invention

The present invention provides a process for the manufacture of a composite material, in which a material comprising vegetable fibre is subjected to at least one pretreatment and the vegetable fibre is thereafter subjected to at least one thermoplastic processing step.

The present invention also provides composite materials whenever manufactured by such a process. The composite materials may be produced in the form of an artefact, such as a panel or board.

The present invention also provides a method of processing a material that comprises vegetable fibre, in which the said material is fed through an extruder. It also provides a vegetable-fibre-containing material whenever processed in this way.

### Brief Description of the Drawings

Figure 1 is a sketch of an extruder showing the various zones thereof and the points at which various materials are introduced.

Figure 2 is a sketch showing cumulatively the proportions of the zones of the extruder of Figure 1, relative to the screw diameter. By way of an example, the screw configuration in this illustrated embodiment is 970313, the screw diameter D = 40 mm and the effective screw length is 1520 mm.

### Description of Exemplary Embodiments

The starting material for the pretreatment step is or contains at least one material that comprises fibre and that is of vegetable origin. Materials from a wide variety of vegetable sources may be employed, although it is preferred to use vegetable materials that constitute an agricultural product or by-product. The vegetable fibre material may be obtained from whole plants or from various parts thereof, for example stems, stalks, foliage, roots, shoots, bulbs, tubers, fruits (which term includes nuts), parts of fruits such as shells, pulp and kernels, seeds, seed-pods, husks, hulls and the like. It is not, in general, necessary to isolate the vegetable fibre *per se* (although this is not precluded); thus, the fibrous starting material may be in any suitable form, e.g. grits, flakes, flour or meal.

Plants from which the fibrous vegetable material may be obtained include, for example, plants, *Gramineae,* that yield cereals, such as wheat, barley, oat, rye, rice, maize, sorghum and millet; plants having oil-bearing fruit or seeds, such as soybean, coconut, oil palm, sunflower, ground nut (peanut), safflower, olive, rape (canola) and the like; leguminous plants; plants yielding textile fibres, such as cotton, flax, jute, hemp and ramie; and the cocoa tree *(Theobroma cacao).* Particular materials that come into consideration are meal products of the oilseed-processing industry, e.g. rapemeal, soybean meal and sunflower meal, other soybean products, other sunflower products, especially sunflower hulls, cocoa by-products (especially cacao bean shell), flax shives, barley husk, wheat bran, by-products from the extraction of palm oil or palm kernel oil. and by-products of the malt industry. Fibre from a mixture of two or more sources can, of course, be used.

The pretreated fibrous vegetable material may be subjected to the thermoplastic processing step in the presence of protein. The protein may serve as a gluing or bonding agent in the product. The protein may be obtained from any of a variety of sources, e.g. microbes, fungi or even animal blood. The protein may be used in its native form or may be in a modified form, e.g. a form obtained by enzymatic and/or chemical and/or physical modification. In certain preferred embodiments, the protein is obtained from a vegetable source and may therefore be or include protein which is present in the fibrous vegetable material. Thus, for example, certain oil seeds, such as soybean or sunflower, contain substantial quantities of protein (e.g., for 54-55% by weight in the case of soybean meal), which may be utilised in the thermoplastic processing step. Thus, it is not, in general, necessary to isolate the vegetable protein *per se* (although the use of a protein isolate or concentrate is not precluded). Naturally, the protein may be a mixture of proteins from two or more sources. In order to achieve adequate bonding of the fibres in the end product, the protein should have a sufficient solubility or dispersibility in water; accordingly, the protein preferably has a protein dispersibility index (PDI) of at least 5%, more preferably at least 15% and most preferably at least 25%.

The pretreatment may include one or more of the following steps, namely heat treatment, size reduction, addition of alkali, blending and/or mixing, defibrillation, wetting and washing. In embodiments with two or more pretreatment steps, such steps may be carried out sequentially or simultaneously. The choice of pretreatment procedures for optimum results will depend on the raw material(s) used and any prior treatment to which the raw materials have been subjected (e.g. oilseed processing).

In certain preferred embodiments, the vegetable fibre is subjected to a heat-treatment prior to thermoplastic processing. Although the Applicant does not wish to be bound by theory, it is believed that the heat-treatment reduces the water-absorbing capacity of the fibre. Specifically, the heating step is believed to promote bonding at the sites occupied by pendant oxygen radicals on the fibres, thereby reducing the level of water-absorption in the end product that would be attributable to such pendant oxygen radicals. It will be appreciated that protein present in the vegetable material during the preliminary heat treatment may suffer denaturation, especially at higher temperatures; however, this is not necessarily a drawback, since denatured protein has a lower attraction for water than undenatured protein and may result in a product having a desirably low water-absorption. Of course, some fibre-containing agricultural products and by-products may already have been subjected to heat treatment during their production, and such products or by-products may be used directly in the thermoplastic processing step.

The heat treatment of the vegetable fibre may be effected at a temperature of from 50° to 200°C. Temperatures at the high end of this range, e.g. up to 160° or 170°C, may be appropriate when the fibrous material contains little or no protein or when denaturation of any protein present can be tolerated. However, where the vegetable material also contains protein and it is desired to minimise denaturation of the protein, it may be appropriate to use substantially lower temperatures, e.g. up to 110°C, preferably up to 120°C, more preferably up to 110°C, although temperatures of at least 80°C will normally be used, preferably at least 90°C and typically at least 100°C. It is, however, possible to employ lower temperatures, e.g. less than 100°C down to 50°C, or to effect a multi-step, e.g. a two-step, heat treatment, such as one in which the temperature of the fibrous vegetable material is progressively raised from step to step without any intermediate cooling.

The heat treatment of the vegetable material may be carried out in any suitable apparatus, for example a fluidised bed heater, a rotating drum heater, a conditioner or an extruder, for example in the upstream stages of an extruder. Another suitable apparatus may be an expander, which is usually an extruder used for the purpose of increasing the bulk density of oilseed flakes by forming pellet-like collets for more efficient oil extraction. In certain preferred embodiments, the heating may be effected in a desolventiser-toaster apparatus, as conventionally used to remove residual solvent from oil seed meal or the like following extraction of the oil content with a solvent, especially hexane. Conventionally, soybean meal or the like is fed into the DT apparatus with a temperature of 55-60°C, and is then, to use the usual term of art, "toasted" (i.e. cooked) at 100-105°C at a moisture level of from 16-24%, and typically about 20%, for usually 15-45, e.g. 15-30, and typically 20-25, minutes. The toasted defatted soybean meal or the like typically emerges from the DT apparatus at a temperature of about 100°C. The PDI of the toasted soybean is typically 20-30%, in contrast to soybean meal that has been subjected to flash desolventiser and which has a higher PDI, e.g. up to about 90%. Flash desolventising may constitute a preliminary treatment in certain embodiments of this invention.

The duration of the heat treatment will depend on the nature of the starting material, the temperature(s) used and the desired end-product characteristics. Usually, a period of from 1 to 120 minutes, more usually 15 to 90 minutes, e.g. 30 to 60 minutes and typically 40-45 minutes, will come into consideration.

The pretreatment may comprise the addition of an alkali, typically to a pH of from 8 to 12. Alkalis include alkali metal hydroxides, e.g. NaOH or KOH, normally in aqueous solution. Although the Applicant does not wish to be bound by theory, the alkali may promote the dissolution of any lignin that may be present in the vegetable material, which lignin may act as a glue and hence contribute to the bonding of the fibrous matter in the end product. In certain preferred embodiments, a heat-treatment is carried out in the presence of an alkali.

If, for example, the vegetable material is too coarse, it may be subjected to comminution (which term includes grinding and the like), preferably to a particle size of 4 mm or less, and more preferably to a particle size of 0.5mm or less. Suitable grinders, mills and other size-reduction machines are available commercially; it may also be possible to effect comminution in an extruder.

In order to improve the homogeneity of the material fed to the thermoplastic processing step, it may prove advantageous to subject the material to preliminary mixing or blending, especially if one is using a vegetable material of variable constitution, or a mixture of vegetable materials, or a mixture of at least one vegetable material with at least one additive.

In embodiments where the fibre-containing vegetable material has no or insufficient protein, or if the pretreatment, for instance a heat-treatment, causes too great a denaturation of the protein in the vegetable material, protein (or additional protein) may be added during or prior to the thermoplastic processing step (although, in general, it will be added after any preliminary heating step). The amount of such protein, e.g. soy protein, added separately will usually be up to 100%, and is typically at least 5%, by weight, relative to the fibrous vegetable material. Nonetheless, it may be possible in certain embodiments to dispense with protein addition, despite a measure of denaturation, although sheet materials produced thereby will tend to resemble particle board rather than MDF.

The solubility of the protein is pH dependent and it has been found advantageous to employ a pH of from 8 to 10 in the thermoplastic processing step. The required level of pH may be attained by adding an alkali, for example an alkali metal hydroxide, e.g. sodium hydroxide (caustic soda) or potassium hydroxide (caustic potash), normally in aqueous solution. The alkali may be added to the fibrous vegetable material and/or the protein at any appropriate stage during or prior to the thermoplastic processing step. Thus, where the protein is naturally present in, or has been admixed to, the fibrous vegetable material, the above-described alkaline pretreatment, e.g. an alkaline heat treatment, of the vegetable fibre may also serve to achieve a required protein pH.

The thermoplastic processing step is usually also effected in the presence of water. Suitably, the amount of water may be in the range of from 25% to 50% by weight, relative to the total of fibrous vegetable material and protein, e.g. from 30 to 40% by weight. In general, and as a guide to selecting an appropriate level of water, it has been found that the less denatured the protein, the greater the amount of water that can be accommodated. If the protein has been excessively denatured, it will absorb insufficient water to achieve satisfactory plasticisation of the mass undergoing thermoplastic processing. This may be an important consideration when it is desired to dispense with the need for other, chemical plasticisers.

In the thermoplastic processing step, the material is subjected to sufficient temperature and pressure to cause the protein to bond the vegetable fibres into a coherent mass capable of achieving structural integrity, if appropriate after drying and/or curing. It is, of course, possible that other components present in the vegetable material, e.g. sugars, lignin or lipids, may contribute to bonding.

In certain embodiments, the thermoplastic processing step may be effected by compression moulding. In such a step, a charge of the vegetable material(s) and possibly additive(s) is enclosed within a closed mould in which it is subjected to the application of heat and pressure. Although compression moulding is commonly used for thermosetting plastics, the use of thermoplastic materials in compression moulding is known. The mould, the shape of the cavity of which will determine the shape of the moulded composite part, may be of any conventional type, for example a positive mould, a flash mould or a semipositive mould. Likewise, conventional means for applying clamp pressure to the compression mould may be used, for example an hydraulic press or a pneumatic press. Conventional means may also be employed for heating the press, for example steam heating, electrical heating, hot-oil heating, a highpressure water system or gas flames.

In certain embodiments, the thermoplastic processing step may be an extrusion process, in which the raw material comprising the vegetable material(s) and possibly additive(s) is formed into a continuous stream which is shaped into the desired configuration by means of a die. A significant advantage of an extruder, compared with other types of moulding equipment, is the capability of fulfilling different functions at the same time. The extruder can serve as a pump or transporter for highly viscous materials, as a heater, a mixer or a grinder, and even as a continuous reaction barrel. The heat-exchanging area is also very large in comparison with other reactors. The melt temperature within the extruder is comparatively easy to control and so-called "hot-spots" can be avoided. By changing the screw configuration within the extruder, the mixing and shear behaviour can be adjusted.

Single-screw and multi-screw extruders are known in the thermoplastics art and may be used or readily adapted for use in the present process. In certain embodiments, the extrusion step may be essentially a compounding process to form pellets, granules or the like which may subsequently be used in a further processing step. The pellets, granules or the like may be formed by pumping the compounded material into a die having a plurality of holes in its face, the extruded strands then being conveyed to a cutting device. It is also possible to produce fluffy or low density materials using an extruder, e.g. from soy or sunflower hulls. In a further alternative, the compound material may be extruded in the form of a flat sheet, which is subsequently diced. In certain other embodiments, the material is extruded through a die of the appropriate shape to form an elongate product of the required profile or cross-sectional shape, which product is subsequently then cut into the desired lengths. Articles that may be formed in this manner include pipes, tubes, flat film, flat sheets and elongate pieces of various cross-sections (profiles), for instance for use in the construction, automotive and appliance industries, as well as parisons for subsequent blow-moulding operations. In certain other embodiments, the extruder may be fitted directly with apparatus for producing blown film, whereby the extruder die distributes the extrudate into an annular ring, which may be initially drawn together and sealed to form a bubble on top of the die, into which bubble compressed air is forced, the bubble being then drawn away at an appropriate rate to a mechanism which flattens it into a two-layer sheet. Co-extrusion processes may also come into consideration, whereby the vegetable-based material or mixture is extruded with a different material through a common die such that one of the materials forms a coating on the other. The said different material may, for instance, be another vegetable-based material or a conventional, synthetic thermoplastics material.

In certain embodiments, the extruder in which thermoplastic processing is carried out is one in which one or more pretreatments, e.g. a heat treatment and/or a size reduction and/or addition of alkali, are carried out, in particular upstream of the extruder zone or zones in which the thermoplastic processing is effected.

Fluffy materials, pellets, granulates or the like produced by an extrusion process as discussed above may be used in any of a variety of further processing steps, for example in a compression moulding step, a film-blowing step or in an injection moulding or vacuum moulding step. In injection moulding, the granular, pelletised or otherwise comminuted material is heated to an appropriate temperature and then injected under high pressure into a mould to form a solid shape conforming to the contours of the mould walls.

The above-discussed thermoplastics processing steps are well known in the plastics field (see, for example, Modern Plastics Encyclopaedia 1980-1981, McGraw-Hill Inc. (1980)), and machines for injection moulding, extrusion, film blowing, injection moulding, vacuum moulding and the like are commercially available. Such techniques and machinery may be employed, or readily adapted, for the purposes of the present invention. The operating parameters, in particular the temperature, pressure and processing time, will depend in any given case upon the nature of the starting material(s) and the desired characteristics of the end product; however, determination of such parameters should be well within the grasp of the skilled person.

Exemplary processes according to the present invention may be outlined as follows:
(a) Sunflower meal or the like is heat-treated with a desolventizer-toaster apparatus in which the meal is heated with steam such that it leaves the said apparatus at a temperature of about 100°C. The resultant heat-treated meal is subjected to grinding, the ground material then being subjected to compression moulding to form the required artefacts. The meal may optionally be subjected to additional heat-treatment, with or without the presence of an alkali, prior to compression moulding. Untoasted sunflower meal could be substituted for the heat-treated meal.
(b) Sunflower meal or the like is subjected to extrusion, optionally after grinding. In one or more of the upstream regions of the extruder, water and/or aqueous alkali may be added and the vegetable material may be heated to the required temperature. Downstream in the extruder, the heat-treated material may be processed at a lower temperature and may be mixed with additional protein, to compensate for denaturation of protein originally in the vegetable material. The addition of protein, for example soy protein, will also be necessary if the original fibrous material is deficient in protein, as in the case where sunflower hulls or the like are substituted for the sunflower meal. The addition of protein also depends on the required characteristics of the desired end product: for example, the requirements for particle board are different from those for MDF. The downstream stages of the extruder may constitute the thermoplastic processing step and the product may be extruded through an appropriate die to form a board resembling conventional particle board; alternatively, the extrudate may be regarded as an intermediate product which is subjected to compression moulding directly or after the lapse of some time, for example, by a secondary producer.
(c) Sunflower meal or the like is subjected to a heat treatment in a conditioning apparatus, the heat-treated material then being subjected to compression moulding.

The product obtained from the thermoplastic processing step, such as a compression moulding step, may be subjected to an after-treatment, e.g. may be dried and/or cured, as appropriate. Such after-treatment may serve to increase the level of protein denaturation; this is advantageous since undenaturated protein attracts water and hence the after-treatment may serve further to reduce the level of water absorption.

In addition to protein and water, one or more further additives may be employed, by incorporation in the starting material and/or by addition to the material during the course of the process. A wide variety of additives come into consideration, for example the following:
(i) Additional Polymers, especially naturally occurring polymers, such as other proteins and the like;
(ii) Additional plasticizers, for example glycols and other polyols (such as, for example, ethylene glycol, propylene glycol, 1,3-propane diol, glycerol, polyethylene glycol and the like), sugar alcohols (such as, for example, sorbitol and xylitol), monosaccharides and disaccharides (such as, for example, glucose and sucrose), and the like;
(iii) Cross-linking agents, for example polyaldehydes (such as, for example, glutaric dialdehyde, glyoxal (e.g. as a glyoxal/1,2-ethanedial 40% solution in water) and the like);
(iv) Compatibilisers, surfactants, emulsifying agents and the like (such as lecithin and other oil-based derivatives, and nonionic, cationic, anionic, amphoteric and zwitterionic surface-active agents, and the like);
(v) Processing aids, including lubricants and additives for improving the processing throughput (e.g. oils);
(vi) Wood-based raw materials, e.g. wood chips, sawdust, wood flour and the like, especially such materials that are acceptable in the production of sheet or board products;
(vii) Antioxidants, antistatic agents, biocides, colouring agents, fibrous reinforcing materials, fillers, extenders, flame retardants and ultraviolet stabilisers; and
(viii) Chemical bonding agents, especially synthetic resins, for example isocyanate resins, urea/formaldehyde resins, phenol/formaldehyde resins or urea/melamine resins.

A chemical bonding agent, if used, may be added to the vegetable material before or during a thermoplastic processing step; thus, it may be added during processing in an extruder. Such a chemical bonding agent may be used to replace, wholly or in part, protein as the gluing agent in the resultant product. Other bonding agents may come into consideration.

It may prove advisable to add chemical cross-linkers, if used, at or after the end of the pretreatment step, especially if this is a heating step; otherwise, bonding may occur in discrete domains in the composite, thereby giving rise to lines of weakness that are prone to fracture.

It is preferred to use additives that occur naturally, or which are derived directly from naturally occurring materials, and/or that are biodegradable (e.g. into carbon dioxide, water and, possibly, biomass) in composting or in other biological waste-management processes. It will be understood, of course, that a reference herein to a component, such as fibre-containing vegetable material, protein or type of additive, includes not only a single material but a mixture of two or more materials of the appropriate description.

Purely by way of example, typical combinations of raw materials and additives that come into consideration include soy meal with water, with glycerol, with glyoxal and/or glutaric dialdehyde, or with lecithin; sunflower meal with water; a mixture of soy meal and sunflower meal (in any proportion) with water; rapeseed meal with water; wheat bran with soybean meal and/or water; cocoa shell with soybean meal and/or water; and sunflower hull with a chemical resin; in each case either with or without the addition of a colourant.

Depending upon their mechanical properties, in particular stress, strain and elastic modulus, polymers may be divided into three main groups, thus:
(1) Brittle polymers (having high elastic modulus and low strain, for example polystyrene),
(2) Elastic (having a low elastic modulus and high strain, for example vulcanised rubber), and
(3) Tough polymers (the modulae being either quite high or quite low).

The mechanical properties of the composites manufactured according to the present invention may likewise vary widely, and the properties of any given composite may depend upon such factors as the nature of the raw material(s); the presence or absence of such additives as a cross-linking agent or a plasticiser; the nature of the cross-linking agent(s), if used; the nature of the plasticiser(s), if used; the amount of cross-linking agent and amount of plasticiser, relative to the raw material(s); the nature of any chemical reactions that may occur during processing; the nature of any preliminary treatment or any treatment that may be carried out subsequent to the thermoplastic processing step(s); the presence or absence of reinforcing fillers; the presence or absence of other additives; the orientation of the fibrous material in the composite; the type of thermoplastic processing that is used; and the operating parameters used in the thermoplastic processing step or, as the case may be, in each of the thermoplastic processing steps. For example, in the case of extrusion, there may be variations as to the screw configuration, for example the type and size of the various elements thereof; the flow and weight percentage of the starting materials charged to the extruder, including, for example, the manner in which the various components are added to the various compartments of the extruder; the screw speed; the nature of the die, which need not be limited to a sheet die; the temperature profile and the pressures applied.

Thus, it has been surprisingly found that composites with completely different characteristics - for example, materials characterised by a high stiffness through to materials having a high elasticity - may be produced from various agricultural raw materials or fractions or by-products thereof, by using one or more thermoplastic processing steps in accordance with this invention, even in the absence of conventional, synthetic chemical cross-linking agents and/or conventional, synthetic chemical plasticising agents. Hence, for example, by changing the mixture of raw materials, and by introducing different processing steps and additives (e.g. water, lecithin, sugar, glycerol, glyoxal, glutaric dialdehyde or the like), different products with different characteristics may be developed, which exhibit good application performance, for example comparable to or better than products that are currently available commercially. Thus, it is possible to manufacture products according to the present invention that differ in strength, elasticity and stiffness, for example products having a high E-modulus and low strain and products having a high elasticity; products that differ in shape and/or density; products that differ with regard to their biodegradability or compostability; products that exhibit barrier properties with regard to oxygen and other gases, ranging from permeable materials to materials having good barrier properties; products that differ in their barrier properties with respect to heat, including materials having good heat-resistance; and products that vary with regard to their resistance to organic solvents, oils, water and the like, for example products having little or no resistance to products having good barrier properties with regard to water. Various products according to this invention have been found to exhibit good screw-holding capacity. Certain products according to this invention have also been found to exhibit acceptable compatibility with paint and other coating materials.

The products of the present invention, depending upon their final properties, may find application in various industries and trades: they may, of course, be used in combination with other materials. For example, they may find use as constructional materials in the building and construction industries, as well as in the furniture and cabinet-making industries, e.g. in the form of particle board, MDF or HDF (high density fibreboard); as bulk thermoplastic products, such as disposables, sheets, foils, webs, laminates and films, for instance, for agricultural uses (which expression herein includes horticultural uses); as backing materials in floor coverings, such as carpets or carpet tiles; as roofing materials; as constructional materials for use in road building and the like; as packaging materials such as, for example, bottles, snack-packs, crates, containers and the like; as decorative items, e.g. desk tops, plaques, store fixtures, wall tiles and the like; as extruded granulates for use as a raw material in, for instance, household materials, toys and the like; and geotextiles, for instance, for covering dikes and the like.

### Examples - General Methodology

In addition to the general methods known to people skilled in the art, the following rather specific methods have been used. Prior to analysis, most samples either were conditioned by placing them aside in a conditioning cell with constant temperature (20°C) and relative humidity (60%) or were died in an oven (typically at 90°C) or in a vacuum oven (at 65°C).
1. Mechanical properties: bending strength and elastic modules were determined on a Zwick 1445 bending/tensile test apparatus.
   To achieve values independent from the dimensions of the sample, the strength and the modulus were divided by the dimensions of the sample (thickness and width).
   All samples used as examples of the present invention had a thickness of less than 6 mm. Thus, the quality of a traditional MDF (with thickness of less than 6 mm) was used as a comparison.
2. Screw holding capacity: after conditioning, samples were drilled (hole diameter 2 mm), a screw was turned into the hole, and the screw was subsequently pulled out with a constant speed. The force necessary to pull it out was measured on a Zwick 1445 tensile test apparatus. Because screw-holding capacity is not a requirement for a board with a thickness of 6 mm or less, the figures quoted are those of the board samples with a thickness of 12-15 mm.
3. Water holding capacity: edge swell after 24 hours in water (thickness (d) of a sample) was measured before and after the sample was placed 24 hours under water. The increase in thickness was expressed as a percentage of the thickness of the dry sample.
4. Moisture resistance: edge swell after an increase in relative humity was determined as follows: samples were placed in an environment of 30% R.H. (relative humidity) (20°C) until constant weight. Then the samples were placed in an environment of 90% relative humidity (20°C ), again until constant weight. After the measurement the samples were placed in 30% relative humidity and after two weeks the dimensions of the samples were measured again.

The present invention is illustrated in and by the following examples.

### Example 1

A number of experiments were carried out using a variety of starting vegetable materials, specifically meals derived from soybean, sunflower seed, rapeseed, cocoa shell and wheat bran. A mixture of sunflower meal and soy meal was also tested. The following is a typical experimental procedure for these experiments.

The selected vegetable material was first subjected to grinding to an appropriate particle size. Thus, for example, a sunflower meal was obtained having a particle size to a maximum of 0.5 mm, whereas soy meal was obtained having a particle size to a maximum of 0.2 mm. The ground vegetable material was then subjected to mixing, if or as necessary; typically, mixing was carried out manually for 10 minutes.

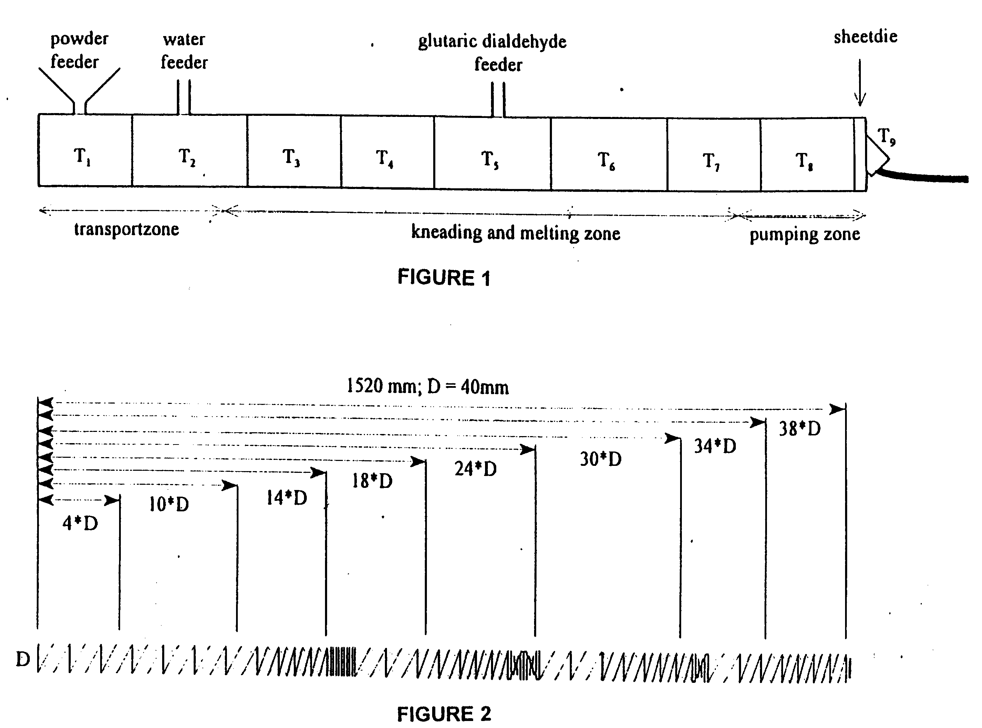

In certain experiments, the ground vegetable material was subjected to extrusion in a Berstorff ZE40 twin extruder (counter-rotating; (L)ength = 1520 mm; (D)iameter = 40 mm; L/D = 38) having nine zones, the temperatures of which were separately adjustable. The arrangement of the extruder was generally as shown schematically in Figure 1. The types of elements used were a transport element, kneading elements, pressure elements and a negative screw element (RSE). The vegetable raw material was gravimetrically dosed at zone 2 (2D) by means of a Brabender powder feeder (< 2% flow variation)/Ktron Soder K2M T85 powder feeder (volumetrically).

Water, or NaOH or glycerol, if used, was injected in zone 2 (7D).

Glutaric dialdehyde or the like, if used, was added in zone 5 (21D) by means of a toothed wheel pump.

The die was a sheet-forming die of dimensions 72 x 4 mm or a normal die having strand-forming holes therein.

Eight different temperature profiles were used during various experiments using the extruder, and these are recorded in Table 1 below. The various combination of temperature profiles, die configurations and raw materials that were investigated are recorded in Table 2 below, this table also recording the intended areas of application of the various products.

In certain experiments, a vegetable material, being either the ground and mixed vegetable starting material or an extruded vegetable material, was subjected to compression moulding. The vegetable material was first subjected to a pre-heating step for 2 minutes at 140°C without the application of pressure. Moulding was then effected in a mould having a thickness of from 4 to 21 mm for a period of 8 minutes under a pressure of 20 tonne and at a temperature of 140°C. Thereafter, the moulded material was cooled for 8 minutes with the continued application of the 20 tonne pressure; the material was allowed to cool to room temperature.

The moulded material was then dried at a temperature of 90°C for a period of 1 to 6 days, depending on the types of raw materials and the process used. Prior to analysis, samples were conditioned at a constant temperature of 20°C and a relative humidity (RH) of 60% over a period of 14 days.

Results are given below in Tables 3 to 6. It should be noted that some of the results were obtained from processes that had not been optimised. In these tables, the following abbreviations are used:
- cocoa =: Cacao bean shell
- MDF =: Medium density fibreboard
- P =: Compression moulding
- E =: Extrusion step
- EP =: Extrusion followed by compression moulding
- KP =: Kneading followed by compression moulding
- RH =: Relative humidity

Unless otherwise stated, pH values in the tables refer in general to the pH of water added during the process, which was typically of pH 7.

Table 3 records the composition, processing parameters and physical properties of a board made from soybean meal. The relevant requirements for conventional MDF are also given for comparison purposes. The boards made from soybean meal with the P and EP processes had superior elastic modulus (stiffness) and screw-holding capacity compared with the MDF requirements.

Table 4 records the composition, processing parameters and physical properties of a board made from sunflower meal. The relevant requirements for conventional MDF are also given for comparison purposes. The boards made from sunflower meal had good elastic modulus and edge swell properties (i.e. comparable to or better than the MDF requirements).

Table 5 records the composition, processing parameters and physical properties of a board made from a mixture of sunflower meal and soybean meal in the stated proportions. The relevant requirements for conventional MDF are also given for comparison purposes. The best result was shown by Experiment 3, in which a combination of 80% sunflower meal and 20% soybean meal was processed using compression moulding, where the mechanical properties and the edge swell properties were comparable to the MDF requirements.

One conclusion drawn from the data (*cf.* Experiments 4 and 5) was that particle board could be produced from a mixture of 80% soybean meal and 20% sunflower meal by means of extrusion, without the need for compression moulding. A combination of extrusion with compression moulding resulted in an MDF-type material.

Table 6 records the composition, processing parameters and physical properties of a board made from a combination of sunflower and soybean meals in the stated proportions. By using a raw material with a high protein content, here soybean meal, the bending strength and elastic modulus could be improved. However, edge swelling values generally increased; this was possibly due to the hydrophilic characteristics of the protein, which is also indicated by the density differences in these samples.

### Example 2

Further experiments were carried out using various mixtures of starting materials, which, in admixture with water, were subjected to compression moulding in a manner analogous to that described in Example 1 and the moulded product was then dried. Table 7 records the compositions, processing parameters and physical characteristics of the resultant composite boards. The approximate requirements for conventional MDF are also given for comparison purposes.

Boards derived from sunflower-based materials (*cf.* Experiments 1, 2 and 4) gave mediocre values for the mechanical properties but showed a good edge swell property.

### Example 3

Various vegetable starting materials were subjected to at least one thermoplastic processing step in the presence of at least one additive selected from the following:
NaOH (from Merck KgaA), which effects swelling of the fibre, resulting in a better contact between the fibre and the continuous phase of the material.
Glycerol (from Chemproha), which is useful in the formation of films and sheets or in injection moulding, resulting in a product having a high elasticity.
Glutaric dialdehyde/1,5-pentane dial 50% in water (from Aldrich), a cross-linking agent.
Lecithin (from Lucas Meyer), which improved contact between the hydrophobic fibre and hydrophilic protein, thereby improving, for example, the throughput of the extruder and the water resistance of the product.

When the additive was incorporated during an extrusion process, addition was effected in the zone indicated in Example 1 above.

Table 8 summarises a pressing process using soy meal and, as additives, glycerol and water. Glycerol is a plasticiser, the addition of which resulted in a more flexible composite material, as shown by high strain values. The Table also records certain mechanical properties of the resultant product and gives an indication of possible application areas for that product.

Table 9 records the processing parameters for the processing of a vegetable raw material comprising a mixture of sunflower meal and soy meal in the presence of water and in the presence of glycerol as the additive. The Table also records the physical characteristics of the resultant composites whilst also giving the results obtained for a composite obtained from a sunflower meal/soybean meal/water mixture to which no glycerol had been added. The optimum glycerol concentration was about 10%. Higher concentrations resulted in low bending strength and elastic modulus; this was probably due to the formation of 'domains' within the composite.

Table 10 summarises the composition and properties of composites formed from a mixture of sunflower and soybean meals in the presence of water and, as additives, glycerol and glutaric dialdehyde. The optimum concentration of glutaric dialdehyde was about 0.5%; above this concentration the board exhibited lower bending strength and elastic modulus.

Table 11 records the processing parameters for the processing, in the presence of water, of a vegetable raw material comprising soybean meal or an 80/20 mixture of sunflower and soybean meals, with the addition of the stated amounts of glutaric dialdehyde as additive. The Table also records the physical characteristics of the resultant composites, with the requirements for conventional MDF materials being given by way of comparison. When processing at low temperatures (as shown in Experiments 2, 3 and 4) in the extruder, the higher the content of glutaric dialdehyde that was used, the better were the mechanical properties.

Table 12 records the processing parameters for the processing, in the presence of water, of a 20/80 mixture of sunflower and soybean meals, with the addition of glutaric dialdehyde. The Table records the physical characteristics of the resultant composites and also gives the results obtained for a composite obtained from the 20/80 sunflower/soy mixture without the addition of glutaric dialdehyde. The relevant requirements for conventional MDF are also given for comparison purposes. The effectiveness of glutaric dialdehyde as a cross-linker in the board material was dependent on the type of raw material used, as can be seen by comparison with the results recorded in Table 11 for soybean based compositions.

Table 13 records the processing parameters for the processing of a vegetable raw material comprising 100% soybean meal in the presence of water and in the presence, as an additive, of sodium hydroxide or lecithin. The Table also records the physical characteristics of the resultant composites and also gives the results obtained for a composite obtained from soybean meal and water without the use of other additives. The addition of an emulsifier, such as lecithin, resulted in an improvement in the mechanical properties of the board, due probably to a better interaction between the fibre and protein.

### Example 4

Experiments were carried out using sunflower hulls or a mixture of sunflower hulls and paper as the raw material and phenol-formaldehyde resin as an additive (specifically as a chemical bonding agent). Boards were produced by means of a process analogous to that of Example 1, the fibrous material being treated with a strongly alkaline (pH 12) solution before compression moulding. The process parameters are recorded in Table 14, which Table also records the physical characteristics of the resultant composite boards, with the relevant requirements for conventional MDF materials being given for comparison. The use of a high pH to treat the fibrous material and the addition of the phenol-formaldehyde resin reduced significantly the edge swelling of the board material.

### Example 5

Experiments were carried out in which composites obtained from soy meal or from sunflower meal by compression moulding were subjected to drying at different temperatures and for different times. The effect of the drying temperature on the elastic modulus and the strength of the resultant composite is recorded below in Table 15. The temperature and duration of the drying process can significantly affect the strength of the board materials.

It will, of course, be understood that the present invention has been described above purely by way of example and that modifications of detail can be made within the scope of the invention.

**Table 1.**

| Temperature profiles in the extruder | | | | | | | | | |
|---|---|---|---|---|---|---|---|---|---|
| **Temperature profile** | **Zone Temperatures (°C)** | | | | | | | | |
| | 1 | 2 | 3 | 4 | 5 | 6 | 7 | 8 | 9 |
| 1 | 20 | 70 | 95 | 110 | 125 | 140 | 140 | 140 | 130 |
| 2 | 20 | 70 | 85 | 100 | 110 | 120 | 130 | 140 | 140 |
| 3 | 20 | 60 | 80 | 100 | 115 | 130 | 130 | 130 | 125 |
| 4 | 20 | 65 | 75 | 90 | 100 | 110 | 110 | 110 | 100 |
| 5 | 20 | 60 | 75 | 90 | 100 | 110 | 110 | 110 | 100 |
| 6 | 20 | 50 | 50 | 50 | 50 | 50 | 50 | 50 | 50 |
| 7 | 20 | 40 | 40 | 40 | 40 | 40 | 40 | 40 | 40 |
| 8 | 20 | 30 | 40 | 40 | 40 | 40 | 40 | 40 | 40 |

**Table 2.**

| Various parameters of the extruder and their application areas | | | |
|---|---|---|---|
| **Temperature profiles** | **Types of die** | **Types of raw material** | **Application areas** |
| 1 to 5 | Sheet | Soy | Various board materials |
| | | Sunflower | · particle board |
| | | Rape | · medium density fibreboard |
| | | | · high density fibreboard |
| 6 to 8 | Sheet | Soy | Various board materials |
| | | Sunflower | |
| | | Rape | |
| | | Cocoa | |
| | | Wheat bran | |
| 6 to 8 | Holes (normal) | Soybean | Granulates for film blowing |
| | | Rape | Injection moulding |
| | | Cocoa | Board materials |

**Table 3.**

| Composition, process, and properties of board materials made from soybean meal. No additives were included, pH of water was 7, and drying temperature was 90°C | | | | |
|---|---|---|---|---|
| | **MDF requirements** | **Experimental** | | |
| | | **1** | **2** | **3** |
| Solids (%) | | | | |
| · Soybean meal | | 60 | 58.6 | 60 |
| Water (%) | | 40 | 41.4 | 40 |
| Process | | P | E | EP |
| Screw configuration | | - | 970418 | 970604 |
| Temperature profile | | - | 7 | 7 |
| Drying time (hours) | | 136 | 64 | 88 |
| | | | | |
| Tolerance thickness (mm) | +/- 0.14 | - | - | - |
| Bending strength (N/mm²) | 40 - 45 | 45.3 | 14.8 | 40.4 |
| Elastic modulus (N/mm²) | 2600 - 2700 | 7454 | 3951 | 6591 |
| Screw holding capacity (N) | | | | |
| · Surface | 950 - 1050 | 1226 | - | - |
| · Side | 850 | - | - | - |

| Edge swell (%) | | | | |
|---|---|---|---|---|
| · after 24 hours in water | 22 - 27 | 29.2 - 36.8 | 6.2 | - |
| · after increase RH | | | | |
| ◆ length | 0.5 | 0.6 - 2.2 | 2.9 | - |
| ◆ width | 0.6 | 1.4-3.8 | 3.6 | - |
| ◆ thickness | 15 | 12.1 | 4.8 | - |
| Density (kg/m³) | 600 - 900 | 1280 - 1330 | 860 | - |

**Table 4.**

| Composition, process, and properties of board materials made from sunflower meal. No additives were included and pH of water was 7. | | | | |
|---|---|---|---|---|
| | **MDF requirements** | **Experimental** | | |
| | | **1** | **2** | **3** |
| Solids (%) | | | | |
| · Sunflower meal | | 60 | 60 | 56.5 |
| Water (%) | | 40 | 40 | 43.5 |
| Process | | P | P | EP |
| Screw configuration | | - | - | 970312 |
| Temperature profile | | - | - | 4 |
| Drying temperature (°C) | | 90 | 90 | 85 |
| Drying time (hours) | | 138 | 48 | 88 |
| | | | | |
| Tolerance thickness (mm) | +/- 0.14 | - | +/- 0.12 | - |
| Bending strength (N/mm²) | 40 - 45 | 21 | 30.9 | 18.7 |
| Elastic modulus (N/mm²) | 2600 - 2700 | 3344 - 3752 | 4799 | 3723 |
| Screw holding capacity (N) | | | | |
| · Surface | 950 - 1050 | 1074 | - | - |
| · Side | 850 | - | - | - |

| Edge swell (%) | | | | |
|---|---|---|---|---|
| · after 24 hours in water | 22 - 27 | 19 - 21 | 11 - 23 | - |
| · after increase RH | | | | |
| ◆ length/width | 0.5 - 0.6 | 0.6 - 1.4 | - | - |
| ◆ thickness | 15 | 3.7 | - | - |
| Density (kg/m³) | 600 - 900 | 830 - 900 | 920 - 1050 | - |

**Table 5.**

| Composition, process, and properties of board materials made from various combinations of sunflower and soybean meals with the specified proportions. No additives were included, pH of water was 7, and drying temperature was 90°C. | | | | | | |
|---|---|---|---|---|---|---|
| | **MDF requirements** | **Experimental** | | | | |
| | | 1 | 2 | 3 | 4 | 5 |
| Solids (%) | | | | | | |
| · Sunflower meal | | 57 | 54 | 48 | 12 | 12 |
| · Soybean meal | | 3 | 6 | 12 | 48 | 48 |
| Water (%) | | 40 | 40 | 40 | 40 | 40 |
| Process | | P | P | P | E | EP |
| Screw configuration | | - | - | - | 970604 | 970604 |
| Temperature profile | | - | - | - | 7 | 7 |
| Drying time (hours) | | 24 | 96 | 72 | 88 | 88 |
| | | | | | | |
| Tolerance thickness (mm) | +/- 0.14 | - | - | +/- 0.12 | - | - |
| Bending strength (N/mm²) | 40 - 45 | 24.3 | 34.3 | 40.8 | 18 | 33.1 |
| Elastic modulus (N/mm²) | 2600 - 2700 | 5283 | 6200 | 6554 | 3559 | 6113 |
| Screw holding capacity (N) | | | | | | |
| · Surface | 950 - 1050 | - | - | 1175 | - | - |
| · Side | 850 | - | - | 985 | - | - |

| Edge swell (%) | | | | | | |
|---|---|---|---|---|---|---|
| · after 24 hours in water | 22 - 27 | 18.3 | - | 19-21.7 | - | - |
| · after increase RH | | | | | | |
| ◆ length | 0.5 - 0.6 | - | - | 1.6 - 2.9 | - | - |
| ◆ thickness | 15 | - | - | 8.7 | - | - |
| Density (kg/m³) | 600 - 900 | 880 | 1050 | 980-1025 | - | - |

**Table 6.**

| Composition and properties of board materials made from various combinations of sunflower and soybean meals with the specified proportions. No additives were included, pH of water was 7, process was compression moulding (P), and drying temperature was 90°C. | | | | | | |
|---|---|---|---|---|---|---|
| | **Experimental** | | | | | |
| | 1 | 2 | 3 | 4 | 5 | 6 |
| Solids (%) | | | | | | |
| · Sunflower meal | 0 | 12 | 24 | 36 | 48 | 60 |
| · Soybean meal | 60 | 48 | 36 | 24 | 12 | 0 |
| Water (%) | 40 | 40 | 40 | 40 | 40 | 40 |
| | | | | | | |
| Thickness (mm) | 2.8 | 3.1 | 3.2 | 3.1 | 3.3 | 5.1 |
| Bending strength (N/mm²) | 44.4 | 37.2 | 35.4 | 35.0 | 30.5 | 18.0 |
| Elastic modulus (N/mm²) | 6254 | 5977 | 5432 | 5226 | 4900 | 3031 |

| Edge swell (%) | | | | | | |
|---|---|---|---|---|---|---|
| · after 24 hours in water | 36.8 | 20.2 | 34.0 | 29.3 | 21.7 | 22.8 |
| Density (kg/m³) | 1330 | 1280 | 1310 | 1130 | 1080 | 860 |

**Table 7.**

| Composition and properties of board materials made from other raw material combinations. No additives were included, pH of the water used was 7, process was compression moulding (P), and drying temperature was 90°C. | | | | | | |
|---|---|---|---|---|---|---|
| | **MDF requirements** | **Experimental** | | | | |
| | | 1 | 2 | 3 | 4 | 5 |
| Solids (%) | | | | | | |
| · Sunflower meal | | 31.5 | 15 | | 48 | |
| · Sunflower hull | | 31.5 | 39 | | | |
| · Soybean meal | | 7 | 6 | 12 | | 12 |
| · Soybean hull | | | | | 12 | |
| · Cocoa shell | | | | 48 | | |
| · Wheat bran | | | | | | 48 |
| Water (%) | | 30 | 40 | 40 | 40 | 40 |
| Drying time (hours) | | 72 | 24 | 88 | 88 | 88 |
| | | | | | | |
| Tolerance thickness (mm) | +/- 0.14 | - | - | - | - | - |
| Bending strength (N/mm²) | 40 - 45 | 17.4 | 10 | 19.7 | 12.7 | 28.8 |
| Elastic modulus (N/mm²) | 2600 - 2700 | 2714 | 2192 | 3841 | 2080 | 3614 |

| Screw holding capacity (N) | | | | | | |
|---|---|---|---|---|---|---|
| · Surface | 950 - 1050 | - | - | 694 | 887 | 1160 |
| · Side | 850 | - | - | - | - | - |

| Edge swell (%) | | | | | | |
|---|---|---|---|---|---|---|
| · after 24 hours in water | 22 - 27 | 12.0 | 13.4 | 42.0 | 20.0 | 34.0 |
| Density (kg/m³) | 600 - 900 | 830 | 700 | 1070 | 900 | 1160 |

**Table 8.**

| Composition, properties, and application areas of composite materials made from soybean meal providing 100% of the solids. Glycerol was added in the various concentrations (% of solids), pH of the water used was 7, process was compression moulding (P), and drying temperature was 90°C. | | | |
|---|---|---|---|
| | **Experimental** | | |
| | 1 | 2 | 3 |
| Solids (%) | | | |
| · Soybean meal | 60 | 60 | 60 |
| Water (%) | 10 | 20 | 30 |
| Additive (%) | | | |
| · Glycerol | 30 | 20 | 10 |
| | | | |
| Bending strength (N/mm²) | 23 | - | - |
| Elastic modulus (N/mm²) | 2000 | 600 | 500 |
| Strain (%) | 2 | - | - |
| Typical Application Areas | Sheets, Laminates, Films, Foils, Backing Materials and Flexible Coatings | | |

**Table 9.**

| Composition and properties of board materials made from sunflower and soybean meals as solids in the specified proportions. Glycerol were included as additive, pH of water was 7, process was kneading, followed by compression moulding (KP), and drying temperature was 90°C. | | | | |
|---|---|---|---|---|
| | **Experimental** | | | |
| | 1 | 2 | 3 | 4 |
| Solids (%) | | | | |
| · Sunflower meal | 48 | 48 | 48 | 48 |
| · Soybean meal | 12 | 12 | 12 | 12 |
| Water (%) | 40 | 30 | 20 | 10 |
| Additive (%) | | | | |
| · Glycerol | 0 | 10 | 20 | 30 |
| Drying time (hours) | 72 | 72 | 72 | 72 |
| | | | | |
| Bending strength (N/mm²) | > 25.2 | 27.8 | 11.8 | 8.6 |
| Elastic modulus (N/mm²) | 4109 | 3100 | 471 | 397 |
| Strain (%) | 0.6 | 0.9 | 4.9 | 4 0 |

**Table 10.**

| Composition and properties of composite materials made from sunflower and soybean meals as solids in the specified proportions. Glycerol and glutaric dialdehyde were included, pH of water was 7, and process was compression moulding (P), and drying temperature was 90°C. | | | | |
|---|---|---|---|---|
| | **Experimental** | | | |
| | 1 | 2 | 3 | 4 |
| Solids (%) | | | | |
| · Sunflower meal | 48 | 48 | 48 | 48 |
| · Soybean meal | 12 | 12 | 12 | 12 |
| Water (%) | 30 | 30 | 30 | 30 |

| Additive (%) | | | | |
|---|---|---|---|---|
| · Glycerol | 10 | 10 | 10 | 10 |
| · Glutaric dialdehyde | 0 | 0.5 | 1 | 2 |
| Drying time (hours) | 72 | 72 | 72 | 72 |
| | | | | |
| Bending strength (N/mm²) | 27.8 | 27.6 | 18.2 | 13 |
| Elastic modulus (N/mm²) | 3100 | 3715 | 2521 | 1764 |

**Table 11.**

| Composition, process, and properties of composite materials made from soybean and sunflower meals. Glutaric dialdehyde was used as additive at various concentration pH of water was 7 | | | | | |
|---|---|---|---|---|---|
| | **MDF requirements** | **Experimental** | | | |
| | | 1 | 2 | 3 | 4 |
| Solids (%) | | | | | |
| · Sunflower meal | | 48 | | | |
| · Soybean meal | | 12 | 59.3 | 59.3 | 60 |
| Water (%) | | 40 | 40.7 | 40.7 | 40 |

| Additive (%) | | | | | |
|---|---|---|---|---|---|
| · Glutaric dialdehyde | | 0.5 | 0.4 | 0.7 | 1 |
| Process | | KP | EP | EP | EP |
| Screw configuration | | - | 970418 | 970418 | 970604 |
| Temperature profile | | - | 6 | 6 | 7 |
| Drying time (hours) | | 72 | 64 | 64 | 88 |
| | | | | | |
| Bending strength (N/mm²) | 40 - 45 | 19.5 | 31.5 | 31.5 | 40.4 |
| Elastic modulus (N/mm²) | 2600 - 2700 | 3918 | 3973 | 4778 | 7170 |

| Edge swell (%) | | | | | |
|---|---|---|---|---|---|
| · after 24 hours in water | 22 - 27 | - | - | 24.4 | - |
| · after increase RH | | | | | |
| ◆length/width | 0.5 - 0.6 | - | - | 2.9/2.8 | - |
| ◆ thickness | 15 | - | - | 11.9 | - |
| Density (kg/m³) | 600 - 900 | - | - | 1350 | - |

**Table 12.**

| Composition, process, and properties of composite materials made from soybean and sunflower meals as solids. pH of water was 7. | | | | | |
|---|---|---|---|---|---|
| | **MDF requirements** | **Experimental** | | | |
| | | 1 | 2 | 3 | 4 |
| Solids (%) | | | | | |
| · Sunflower meal | | 12 | 12 | 12 | 12 |
| · Soybean meal | | 48 | 48 | 48 | 48 |
| Water (%) | | 40 | 40 | 40 | 40 |

| Additive (%) | | | | | |
|---|---|---|---|---|---|
| · Glutaric dialdehyde | | 0 | 0.25 | 0.5 | 1 |
| Process | | EP | EP | EP | EP |
| Screw configuration | | 970604 | 970604 | 970604 | 970604 |
| Temperature profile | | - | 7 | 7 | 7 |
| Drying time (hours) | | 88 | 88 | 88 | 88 |
| | | | | | |
| Bending strength (N/mm²) | 40 - 45 | 33.1 | 30 | 25.5 | 21.3 |
| Elastic modulus (N/mm²) | 2600 - 2700 | 6113 | 4820 | 4581 | 3716 |

**Table 13.**

| Composition and properties of composite materials made from soybean meal as solids. The effects of lechitin as additive and high pH (by addition of NaOH) were presented. Process was extrusion, followed by compression moulding (EP). | | | |
|---|---|---|---|
| | **Experimental** | | |
| | 1 | 2 | 3 |
| Solids (%) | | | |
| · Soybean meal | 66.7 | 66.7 | 66.7 |
| Water (%) | 33.3 | 33.3 | 33.3 |
| pH | 7 | 10 | 7 |

| Additive (%) | | | |
|---|---|---|---|
| · Lecithin | | | |
| Temperature profile | 5 | 5 | 6 |
| Screw configuration | 970313 | 970313 | 970404 |
| Drying temperature (°C) | 65 | 65 | 65 |
| | | | |
| Bending strength (N/mm²) | 14.6 | 14.5 | 29.2 |
| Elastic modulus (N/mm²) | 2796 | 2407 | 5714 |

**Table 14.**

| Composition and properties of board materials made from sunflower hulls as solids. Phenol formaldehyde resin was used as additive. Process was compression moulding (P). | | | | |
|---|---|---|---|---|
| | **MDF requirements** | **Experimental** | | |
| | | 1 | 2 | 3 |
| Solids (%) | | | | |
| · Sunflower hull | | 85 | 85 | 80 |
| · Paper | | | | 5 |
| Additive (%) | | | | |
| · Phenol formaldehyde | | 15 | 15 | 15 |
| pH (of solids) | | 12 | 12 | 12 |
| Process | | KP | P | P |
| | | | | |
| Bending strength (N/mm²) | 40 - 45 | 23 | 16.5 | 55.6 |
| Elastic modulus (N/mm²) | 2600 - 2700 | 2571 | 2328 | 5123 |

| Edge swell (%) | | | | |
|---|---|---|---|---|
| · after 24 hours in water | 22 - 27 | - | 5.9 | 5.1 |
| Density (kg/m³) | 600 - 900 | 680 | 580 | 1200 |

**Table 15.**

| The effect of drying temperature and time on mechanical properties of board materials. Process was compression moulding. | | | | | | |
|---|---|---|---|---|---|---|
| | **Experimental** | | | | | |
| | 1 | 2 | 3 | 4 | 5 | 6 |
| Solids (%) | | | | | | |
| · Sunflower meal | | | | 60 | 60 | 60 |
| · Soybean meal | 60 | 60 | 60 | | | |
| Water (%) | 40 | 40 | 40 | 40 | 40 | 40 |
| Drying temperature (°C) | 90 | 90 | 65 | 90 | 90 | 65 |
| Drying time (hours) | 138 | 64 | 64 | 138 | 64 | 64 |
| | | | | | | |
| Bending strength (N/mm²) | 45.3 | 44.4 | 31.4 | 21 | 16.1 | 9.3 |
| Elastic modulus (N/mm²) | 7454 | 6254 | 6046 | 3752 | 3154 | 1642 |

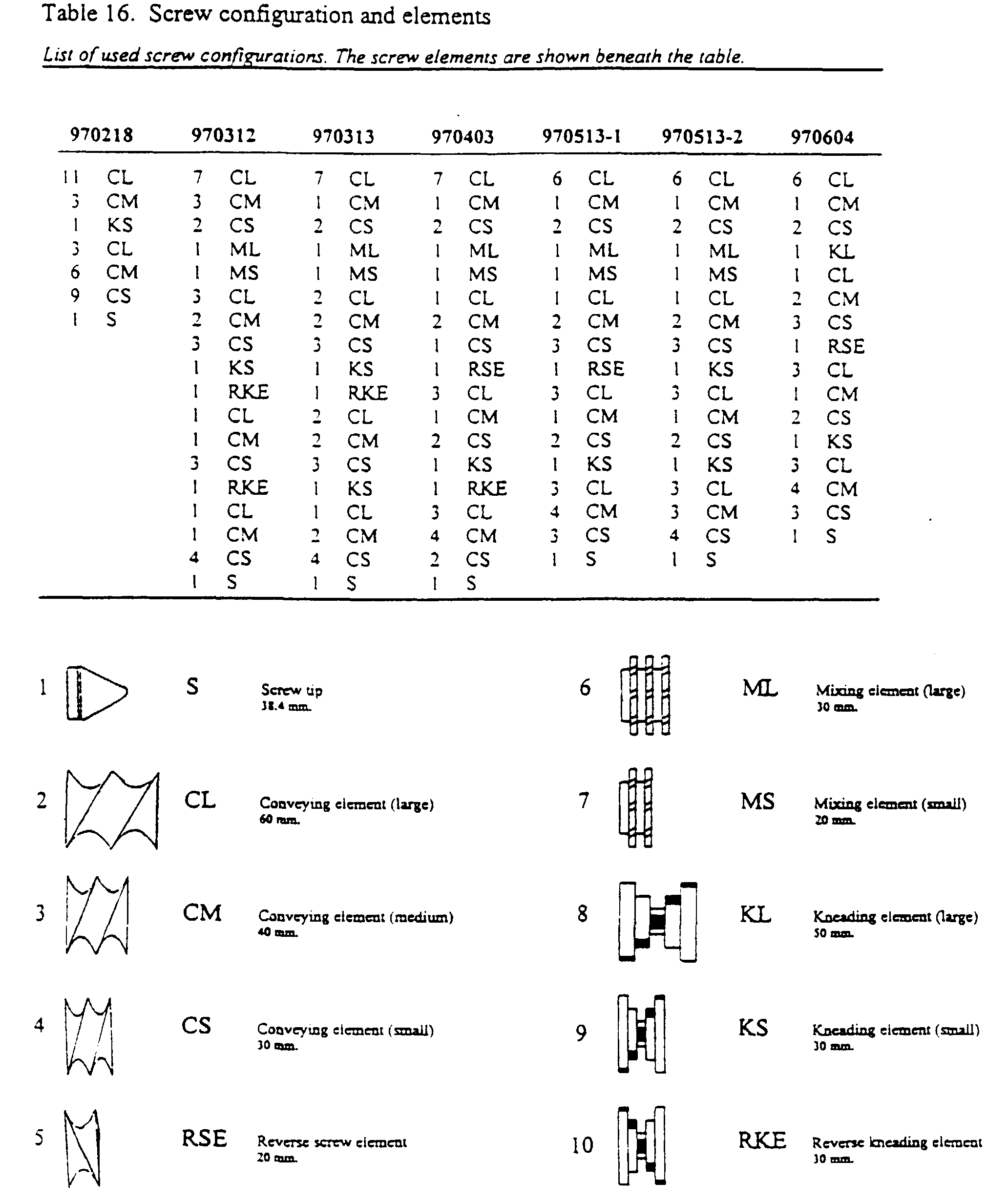

## Claims

1. A process for the manufacture of a composite material, in which a material comprising vegetable fibre is subjected to at least one pretreatment and the vegetable fibre is thereafter subjected to at least one thermoplastic processing step.

2. A process according to claim 1, in which the pretreated vegetable fibre is subjected to at least one thermoplastic processing step in admixture with a bonding agent.

3. A process according to claim 2, in which the bonding agent is a chemical bonding agent.

4. A process according to claim 1 or 2, in which the pretreated vegetable fibre is subjected to at least one thermoplastic processing step in the presence of protein.

5. A process according to any of claims 1 to 4, in which the vegetable fibre is subjected to the pretreatment in admixture with protein.

6. A process according to claim 4 or 5, in which said protein is a vegetable protein.

7. A process according to claim 6, in which fibre is provided in the form of a vegetable material that also contains some or all of the said protein.

8. A process according to any of claims 1 to 7, in which the vegetable fibre is obtained from one or more sources selected from cereal plants, plants producing oil-bearing fruit or seeds, plants from which a textile fibre may be obtained, leguminous plants, and cocoa tree.

9. A process according to claim 8, in which the vegetable fibre is obtained from one or more of rapeseed, soybean, sunflower seed, cacao pod, kernel or seed, flax, barley, wheat and oil palm.

10. A process according to any of claims 1 to 9, in which the material compnsing the vegetable fibre is subjected to one or more pretreatments selected from heat treatment, size reduction, addition of alkali, mixing and/or blending, defibrillation. wetting and washing.

11. A process according to claim 10, in which the material comprising the vegetable fibre is heat treated.

12. A process according to claim 11, in which the material comprising the vegetable fibre is heat-treated at a temperature of from 50°C to 200°C.

13. A process according to claims 11 or 12, in which the heat-treatment is carried out in a desolventiser-toaster or flash desolventiser.

14. A process according to claim 13, in which the material comprising the vegetable fibre is soybean meal or sunflower meal.

15. A process according to any of claims 1 to 12, in which the material comprising the vegetable fibre is heat-treated and/or otherwise pretreated in an extruder.

16. A process according to claim 15, in which the material comprising the vegetable fibre comprises sunflower hulls or sunflower meal.

17. A process according to claim 15 or 16, in which protein is added to the vegetable fibre within the extruder, subsequently to the pretreatment.

18. A process according to claim 15, 16 or 17, in which a thermoplastic processing step is also effected within the extruder.

19. A process according to claim 15, 16 or 17, in which a thermoplastic processing step is effected after the material leaves the extruder, said step being a compression moulding step.

20. A process according to claim 10, in which sufficient alkali is added to attain a pH of from 8 to 12.

21. A process according to claim 10 or 20, in which the alkali is added within an extruder.

22. A process according to any of claims 1 to 21, in which the material compnsing the vegetable fibre is comminuted prior to being subjected to the thermoplastic processing step(s).

23. A process according to claim 11 or 12, in which the material containing the vegetable fibre is comminuted between the heat treatment and the thermoplastic processing step.

24. A process according to claim 10, 22 or 23, in which the material comprising the vegetable fibre is comminuted to a particle size of 4 mm or less, preferably to a particle size of 0.5 mm or less.

25. A process according to any of claims 1 to 18, in which a thermoplastic processing step is carried out that is a compression moulding step.

26. A process according to any of claims 1 to 14, in which a thermoplastic processing step is carried out that is an extrusion step.

27. A process according to claim 18, 19 or 26, in which the material is extruded into sheet form or as a fluffy material.

28. A process according to claim 18, 19 or 26, in which the material is extruded and then cut to form granules, pellets, or the like.

29. A process according to claim 18, 19, 26 or 28, in which the extrudate is subjected to a further processing step selected from injection moulding, vacuum moulding, film blowing or compression moulding.

30. A process according to any of claims 1 to 29, in which the product of the thermoplastic processing step(s) is dried and/or cured.

31. A process according to any of claims 1 to 30, in which the vegetable material is subjected to a thermoplastic processing step in the presence of at least one additive.

32. A process according to claim 31, in which at least one additive is used that is selected from polymers, plasticizers, cross-linking agents, chemical bonding agents, compatibilisers, surfactants, emulsifying agents, lubricants and other processing aids, antioxidants, antistatic agents, biocides, colouring agents, fibrous reinforcing materials, wood-based raw materials, fillers, extenders, flame retardants and ultraviolet stabilisers.

33. A process according to claim 31, in which at least one additive is used that is selected from proteins, starch, ethylene glycol, propylene glycol, 1,3-propane diol, glycerol, polyethylene glycol, sorbitol, xylitol, glucose, sucrose, water, glutaric dialdehyde, glyoxal, lecithin, wood chips, sawdust, wood flour, an isocyanate resin, urea-formaldehyde resin, phenol-formaldehyde resin and urea-melamine resin.

34. A method of processing a material that comprises vegetable fibre, in which the said material is fed through an extruder.

35. A method according to claim 34, in which the said material, whilst passing through the extruder, is heated and/or is subjected to size reduction.

36. A process according to claim 33 or 35, in which alkali is added to the said material within the extruder.

37. A method according to claim 34, 35 or 36, in which an additive is mixed with the material within the extruder, the additive being selected from polymers, plasticizers, cross-linking agents, chemical bonding agents, compatibilisers, surfactants, emulsifying agents, lubricants and other processing aids, antioxidants, antistatic agents, biocides, colouring agents, fibrous reinforcing materials, wood-based raw materials, fillers, extenders, flame retardants and ultraviolet stabilisers.

38. A process according to claim 37, in which the additive is selected from proteins. starch, ethylene glycol, propylene glycol, 1,3-propane diol, glycerol, polyethylene glycol, sorbitol, xylitol, glucose, sucrose, water, glutaric dialdehyde, glyoxal, lecithin, wood chips, sawdust, wood flour, an isocyanate resin, urea-formaldehyde resin, phenol-formaldehyde resin and urea-melamine resin.

39. A composite material whenever manufactured by a process according to any one ofclaims 1 to 38.

40. A composite material according to claim 39, in the form of a panel, board, sheet, foil, web, laminate or film.
